(19) Europäisches Patentamt / European Patent Office / Office européen des brevets

(11) **EP 2 193 304 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **07857259.1**

(22) Anmeldetag: **05.12.2007**

(51) Int Cl.:
**F16L 35/00** *(2006.01)*    **F16L 55/00** *(2006.01)*

(86) Internationale Anmeldenummer:
**PCT/EP2007/063352**

(87) Internationale Veröffentlichungsnummer:
**WO 2009/043386 (09.04.2009 Gazette 2009/15)**

(54) **Sicherungseinrichtung für eine insbesondere Pressverbindung zwischen einer Schlauchleitung und einer Anschlussarmatur**

Securing device for particularly a press-fit connection between a hose line and a connecting fitting

Dispositif de sécurité pour un assemblage notamment par pression entre une conduite souple et un raccord

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.09.2007 DE 102007046061**

(43) Veröffentlichungstag der Anmeldung:
**09.06.2010 Patentblatt 2010/23**

(73) Patentinhaber: **Dipl.-Ing. K. Dietzel GmbH**
**04626 Beerwalde (DE)**

(72) Erfinder: **GROSS, Nicky**
**08412 Werdau OT Langenhessen (DE)**

(74) Vertreter: **Kruspig, Volkmar**
**Meissner, Bolte & Partner GbR**
**Geschwister-Scholl-Strasse 15**
**07545 Gera (DE)**

(56) Entgegenhaltungen:
| | |
|---|---|
| WO-A-2006/100702 | DE-U1-202004 003 544 |
| GB-A- 2 237 346 | US-A- 3 249 370 |
| US-A- 3 813 733 | |

EP 2 193 304 B1

**Beschreibung**

Die Erfindung betrifft eine Sicherungseinrichtung für eine insbesondere Pressverbindung zwischen einer Schlauchleitung und einer Anschlussarmatur, umfassend ein Fangseil, eine Befestigungslasche sowie ein schellenartiges Seillager mit Öffnung oder Bohrung, wobei die Befestigungslasche am schlauchleitungsfernen Ende mit der Anschlussarmatur verbunden und das Fangseil am Seillager fixierbar ist, gemäß Oberbegriff des Patentanspruchs 1.

Hydraulikschlauchleitungen werden zum Anschluss an Arbeitsaggregate, einer Druckerzeugungseinrichtung oder dergleichen mit einer Presshülse versehen, wobei die Presshülse ein Rohrstück aufnimmt, um z.B. mit Hilfe einer Überwurfmutter die derart komplettierte Schlauchleitung an den jeweiligen Hydraulikkreislauf anzuschließen. Über das Einwirken einer umfangsseitigen Presskraft wird das entsprechende Schlauchende im Hülseninneren fixiert. Es besteht jedoch z.B. aufgrund von Alterungserscheinungen des Schlauchmaterials die Gefahr, dass sich unter Druck die Verbindung zwischen Schlauchleitung und Armatur löst. In diesem Fall kann das Schlauchende weggeschleudert werden und es tritt ein gefährliches Peitschen des Schlauches auf, was eine nicht unerhebliche Gefahr unter dem Aspekt der Arbeitsplatzsicherheit darstellt.

Um das Wegschleudern des Schlauches beim Lösen der Verbindung zwischen Schlauchleitung und Armatur wirksam zu verhindern, wurden so genannte Schlauchfangsicherungen entwickelt.

So zeigt beispielsweise die US-PS 3,249,370 eine Sicherheitseinrichtung für einen Druckschlauch, umfassend zwei Schellen mit einem starren Verbindungskörper. Der starre Verbindungskörper hält die beiden Schellen auf Abstand, wobei eine erste Schelle an der Schlauchleitung und eine zweite Schelle hinter der Armatur befestigt wird. Bei einer weiteren Ausführungsform gemäß der Lehre nach US-PS 3,249,370 wird als Verbindungsmittel zwischen zwei Befestigungsschellen eine Kette, umfassend mehrere Kettenglieder, genutzt. Sowohl das starre, stegartige Verbindungsmittel als auch die Kette führen zu einer Vorspannung zwischen Schlauchleitung und Armatur. Löst sich das Schlauchende aus der Armatur, ist durch die begrenzte Bewegung der von vornherein starren Verbindung zwischen den Schlauchschellen nicht immer gewährleistet, dass ein schneller und vollständiger Druckabbau erfolgt.

Bei der Schlauchfangsicherung nach GB 2 237 346 A sind zwei Flansche vorhanden, wobei ein äußerer Flansch von einem Hüllkörper umgeben ist, an dessen Ende sich ein Ring befindet, der über einen flexiblen Verbindungssteg mit dem Hüllkörper bzw. einem dort befindlichen halbzylindrischen Teil in Kontakt steht. Der Ring wird über den Schlauch geschoben und es erfolgt eine Rast-Klemm-Verbindung des zylindrischen Teils im Bereich der Anschlussarmatur bzw. des freien Schlauchendes. Der Hüllkörper muss hierbei bezogen auf die Abmessungen des Flansches exakt abgestimmt sein mit der Folge, dass es schwierig ist, für möglichst unterschiedliche Anwendungsfälle eine standardisierte, einfach herzustellende und kostengünstige Sicherungseinrichtung zu schaffen.

Aus der gattungsbildenden WO 2006/100702 A1 ist eine Schlauchfangsicherung vorbekannt, die ein Fangseil umfasst. Das Fangseil ist einerseits an einer Befestigungslasche fixiert, die sich am anschlussseitigen Ende der Armatur befindet. Andererseits wird das Fangseil von einem schellenartigen Seillager gehalten. Das schellenartige Seillager umfasst ein schwenkbewegliches metallisches Teil, an dessen unteren, zur Schlauchleitung gerichteten Enden eine Schneidkante ausgebildet ist. Da die eigentliche Schlauchschelle bei einem Herausreißen des Schlauchendes aus der Presshülse nur begrenzte Kräfte aufnehmen kann, wird zur besseren Arretierung der Schlauchschelle auf der Schlauchleitung der Effekt genutzt, dass das metallische Teil mit seinen Schneidkanten aufgrund der Kraftwirkung über das Fangseil in die Oberfläche der Schlauchleitung eindringt. Wenn bei einer Lösung gemäß WO 2006/100702 A1 das Schlauchende bereits aus der Innenseite der Presshülse herausgetreten ist und ein Wegschleudern und Peitschen aufgrund des vorhandenen ausströmenden Mediums erfolgt, ist nicht sichergestellt, dass die betreffende Schneidkante tatsächlich in die Oberfläche der Schlauchleitung, die Schelle sichernd, eindringt. Es besteht mithin die Gefahr, dass trotz der Sicherungseinrichtung nach WO 2006/100702 A1 sich der Schlauch vollständig löst mit den eingangs beschriebenen Problemen und Gefahren.

Aus dem Vorgenannten ist es daher Aufgabe der Erfindung, eine weiterentwickelte Sicherungseinrichtung für eine insbesondere Pressverbindung zwischen einer Schlauchleitung und einer Anschlussarmatur auf der Basis eines Fangseils anzugeben, wobei die Sicherungseinrichtung leicht montierbar sein soll und die Möglichkeit einer Nachrüstung an bereits vorhandenen Armaturen bzw. Schlauchleitungen besteht. Die Sicherungseinrichtung soll im Fall eines Lösens der Schlauchleitung aus der Armatur einerseits ein im Wesentlichen vollständiges Herausrutschen der Schlauchleitung aus der Armatur zum Druckabbau, andererseits aber ein sicheres Halten des heraus getrennten Schlauches gewährleisten.

Die Lösung der Aufgabe der Erfindung erfolgt durch eine Sicherungseinrichtung gemäß der Merkmalskombination nach Patentanspruch 1, wobei die Unteransprüche mindestens zweckmäßige Ausgestaltungen und Weiterbildungen beinhalten.

Demnach wird von einer Sicherungseinrichtung für eine insbesondere Pressverbindung zwischen einer Schlauchleitung und einer Anschlussarmatur, umfassend ein Fangseil, eine Befestigungslasche sowie ein schellenartiges Seillager mit Öffnung oder Bohrung ausgegangen, wobei die Befestigungslasche am schlauchleitungsfernen Ende mit der Anschlussarmatur verbunden und das Fangseil am Seillager fixierbar ist.

Das Fangseil ist erfindungsgemäß als sich kreuzende Schlaufe um die Schlauchleitung gelegt, so dass sich im Fall des Herausrutschens der Schlauchleitung aus der Anschlussarmatur eine zusammenziehende Schlinge bildet, die umso fester ist, je stärker die Kraft beim Herauslösen des Schlauchendes aus der Armatur entsprechend der Druckwirkung ist.

Die Seilenden sind kreuzend durch die Öffnung oder Bohrung des Seillagers geführt und es werden die hindurchgeführten Seilenden an der Befestigungslasche fixiert. Das Seillager befindet sich in einem vorgegebenen Abstand vom schlauchleitungsnahen Ende der Anschlussarmatur auf der Schlauchleitung und es ist die Fangseilschlaufe hinter dem Seillager, auf der der Anschlussarmatur abgewandten Seite angeordnet.

Die Befestigungslasche weist mindestens einen Aufnahmeschlitz für die jeweiligen, mit einer Verdickung oder einer Hülse versehenen Enden des Fangseils auf.

Das Fangseil besteht bevorzugt aus einem metallischen Seilmaterial üblicher Festigkeit.

Die Anschlussarmatur umfasst gemäß dem bekannten Stand der Technik eine Presshülse und nimmt ein entsprechendes Schlauchleitungsende innenseitig auf, wobei der vorgegebene Abstand zwischen dem schlauchleitungsnahen Ende der Presshülse und der Schelle des Seillagers mindestens der doppelten Schellenbreite entspricht.

Bevorzugt ist der Abstand zwischen dem Seillager und der Presshülsenfassung der Armatur im Bereich zwischen 30mm und 50mm, hier wiederum bevorzugt zwischen 35mm und 45 mm, gewählt.

Die Schelle des Seillagers weist eine innenseitige Beschichtung oder ein eingesetztes Profil aus einem elastomeren Material auf. Durch die elastomere Beilage ist einerseits für die notwendige Lagestabilität des Seillagers Sorge getragen und es ist andererseits ein systembedingtes Anschwellen des Schlauches bzw. der Schlauchleitung entsprechend dem zulässigen Betriebsdruck möglich.

Die Schelle des Seillagers umfasst ein Flächenstück mit Bohrung zur Aufnahme des Fangseils.

Bei Rohrbogenabschnitten der Anschlussarmatur ist dafür Sorge zu tragen, dass das Flächenstück in der Biegeebene des jeweiligen Rohrbogens liegt.

Der mindestens eine Aufnahmeschlitz der Befestigungslasche ist in eine Richtung orientiert, die im Wesentlichen der radialen Richtung des Flächenstücks mit Bohrung als Bestandteil des Seillagers entspricht.

Das Flächenstück selbst kann gemeinsam mit der Schellenbefestigung an der Schlauchleitung fixiert werden.

Das Fangseil ist im Abschnitt zwischen Seillager und Befestigungslasche, bevorzugt im Bereich der Presshülse, mittels Klettbandbinder oder dergleichen Mitteln an der Armatur und/oder dem betreffenden Schlauchabschnitt gehalten.

Die gestreckte Seillänge L ergibt sich bei einer bevorzugten Ausführungsform der Erfindung nach der Beziehung L = 40 + 2 x B + 2 x C + 8,5 x D mit B Abstand Seillager bis zum Befestigungspunkt der Befestigungslasche, C ungefähre Länge der Presshülsenfassung der Armatur und D als dem Außendurchmesser des Befestigungsschlauches.

Bewährt haben sich Fangseildurchmesser im Bereich zwischen 3mm und 4mm. Beachtet man die vorstehend erläuterte Beziehung zur Ermittlung der Seillänge und wird die erfindungsgemäße Fixierung des Fangseils berücksichtigt, kann im Fall eines Lösens der Verbindung zwischen Schlauch und Befestigungsarmatur der Schlauch vollständig aus der Armatur herausrutschen, so saß der Druck in der Schlauchleitung abgebaut wird. Das Schlauchende wird über die Befestigungslasche sicher an der Armaturenverschraubung gehalten, so dass ein Peitschen der Schlauchleitung mit Beschädigung von Maschinen und Anlagen oder eine Gefährdung des Bedienpersonals ausgeschlossen ist.

Die Erfindung soll nachstehend anhand eines Ausführungsbeispiels sowie unter Zuhilfenahme von Figuren näher erläutert werden.

Hierbei zeigen:

Fig. 1  eine Anordnung der erfindungsgemäßen Schlauchfangsicherung an einer Schlauchleitung mit Gewindeanschluss;

Fig. 2  eine Anordnung der erfindungsgemäßen Schlauchfangsicherung an einer Schlauchleitung mit Flanschanschluss und

Fig. 3  das Prinzip der Schlauchfangsicherung im Fall einer aus der Armatur sich herauslösenden Schlauchleitung.

Die Schlauchleitung 1, die z.B. als Hydraulikleitung zur Versorgung einer Maschinenkomponente 2 vorgesehen ist, wird über eine Schraubarmatur 3 am Hydraulikanschluss 4 der Maschinenkomponente 2 angeschlossen.

Ein entsprechendes Ende der Schlauchleitung 1 ist mit Hilfe einer Presshülse 5 gehalten, wobei die Presshülse 5 in ein Rohrstück 6 mit in der Figur nicht gezeigter Bördelung übergeht, um eine dichte Verbindung zum Hydraulikanschluss 4 zu bewirken.

Die Sicherungseinrichtung für die Schlauchleitung 1 umfasst ein Fangseil 7, dessen Enden mit einer Hülse 8 versehen sind.

Im vorgegebenen Abstand vom Ende der Presshülse 5 ist ein schellenartiges Seillager 9 an der Schlauchleitung 1 befestigt.

Das Seillager 9 nimmt ein Flächenstück 10 auf, das eine Öffnung oder Bohrung 11 umfasst.

Das Flächenstück 10 ist hierbei radial bezogen auf die Schlauchleitung 1 orientiert, und zwar derart, dass diese radiale Orientierung im Wesentlichen einem Aufnahmeschlitz 12 in einer Befestigungslasche 13 entspricht.

Das Fangseil 7 ist als sich kreuzende Schlaufe um die Schlauchleitung 1 gelegt und es sind die Seilenden kreuzend durch die Bohrung 11 des Seillagers geführt. Die hindurchgeführten Seilenden werden über den Aufnahmeschlitz 12 an der Befestigungslasche 13 fixiert. Das Seillager 9 befindet sich in einem vorgegebenen Abstand vom schlauchleitungsfernen Ende der Anschlussarmatur bzw. der Presshülse 5. Die Schlaufe 14 des Fangseils 7 befindet sich hinter dem Seillager 9, auf der der Anschlussarmatur bzw. der Presshülse 5 abgewandten Seite.

Die Schelle des Seillagers 9 weist eine innenseitige elastomere Beschichtung oder ein eingesetztes Profil in Form eines Profilstreifens aus einem elastomeren Material auf, so dass sich ein fester Sitz des Seillagers 9 ergibt und die Möglichkeit besteht, dass sich die Schlauchleitung bei Druckbelastung im Durchmesser verändert.

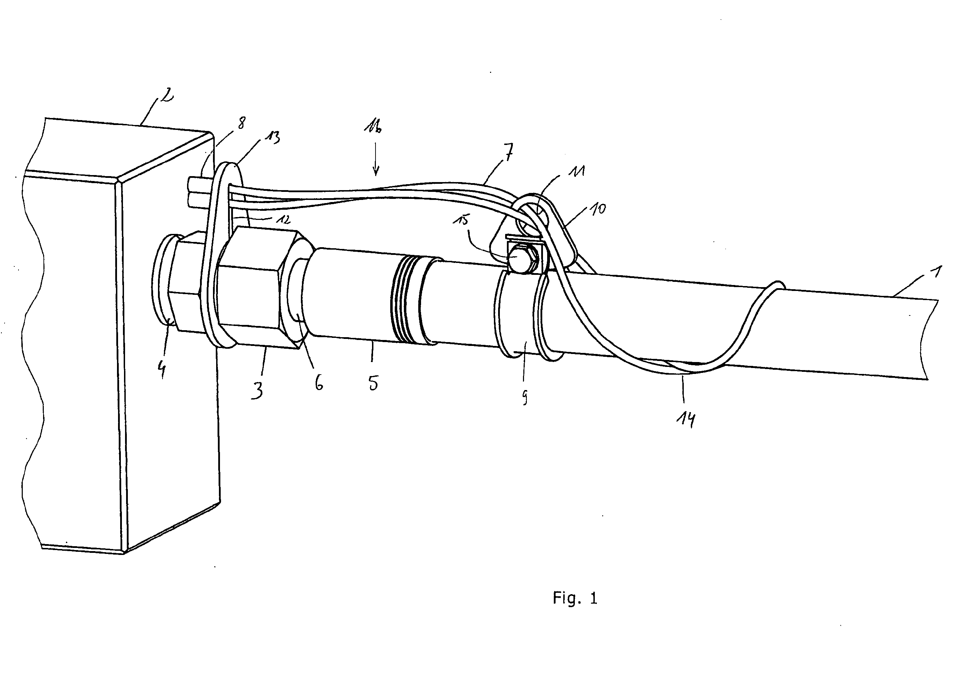

Die Größe bzw. der Spannbereich des schellenartigen Seillagers 9 richtet sich nach dem Schlauchaußendurchmesser. Das Flächenstück 10 wird mit Hilfe der Schelle, wie in den Fig. 1 bis 3 erkennbar, an der Schlauchleitung 1 befestigt, und zwar beispielhaft durch eine Schraube 15, d.h. über eine Gewindeverbindung.

Bei kleinen bis mittleren Nennweiten beträgt der Seildurchmesser im Wesentlichen 3mm. Bei großen Nennweiten hingegen wird ein Seil mit einem Durchmesser von im Wesentlichen 4mm gewählt.

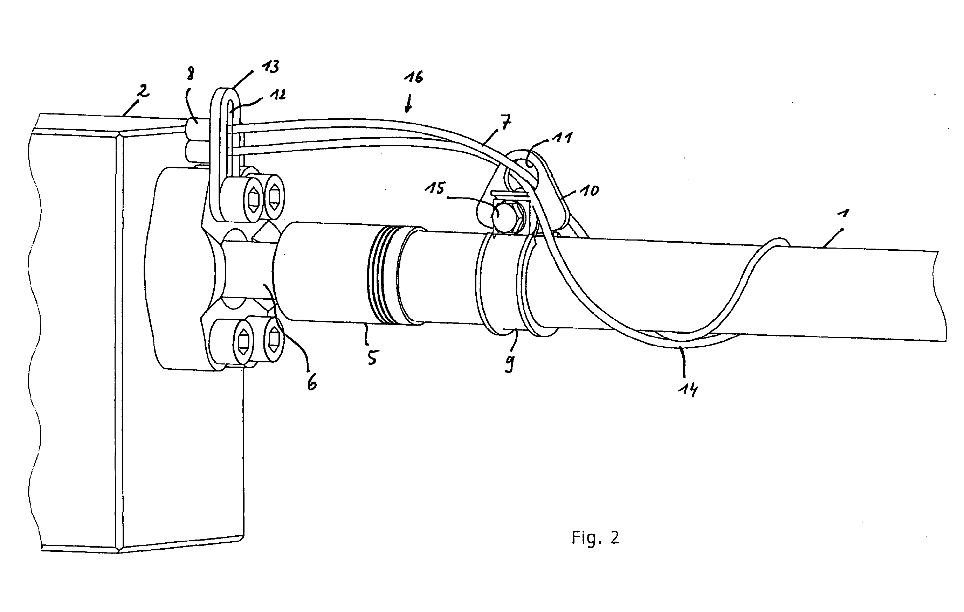

In Abhängigkeit vom Schlauchanschluss wird unterschieden zwischen so genannten DKO/CE-Anschlüssen und SAE-Anschlussvarianten. Das Grundprinzip der Befestigung der Seilenden über einen Aufnahmeschlitz, der sich in der Befestigungslasche 13 befindet, bleibt hiervon jedoch unberührt. Es ist also möglich, die Schlauchfangsicherung bei Schlauchleitungen mit Gewindeanschluss nach Fig. 1 ebenso anzuwenden, wie bei Schlauchleitungen mit Flanschanschluss gemäß Fig. 2.

Der Abschnitt 16 des Fangseils 7 kann ergänzend durch ein Klettband an der Presshülse 5 gehalten werden, so dass sich eine definierte Fangseillage ergibt.

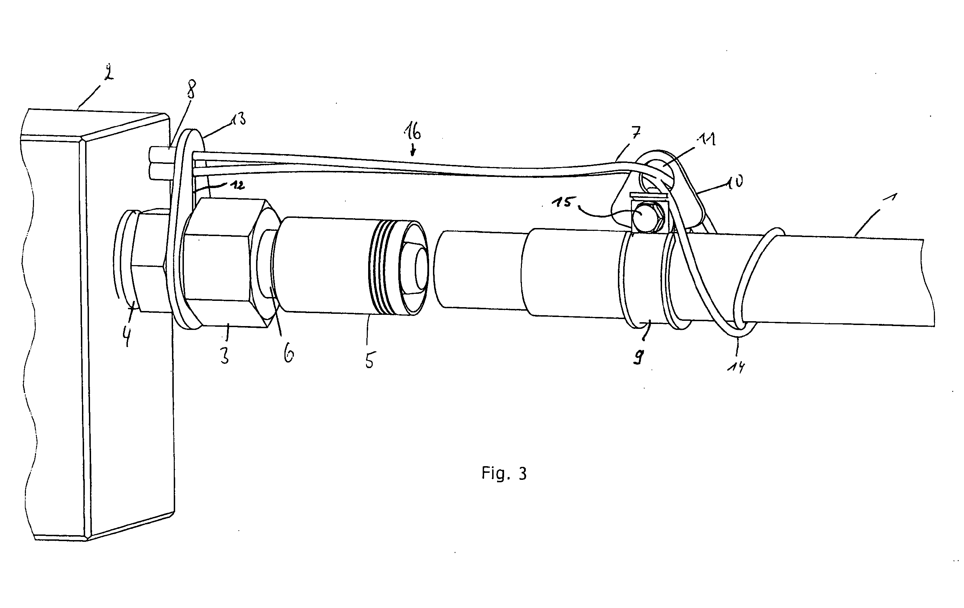

Fig. 3 stellt das Funktionsprinzip der Schlauchfangsicherung in dem Fall dar, dass die Schlauchleitung 1 aus der Anschlussarmatur bzw. Presshülse 5 heraustritt. Es zieht sich hierbei die Schlaufe 14 des Fangseils 7 zu, so dass die Schlauchleitung 1 gegen Peitschen gesichert ist.

Das Fangseil zieht sich also bei entsprechender Belastung zusammen, wobei die Fangseillänge so bemessen ist, dass einerseits das Herausgleiten oder Herausrutschen der Schlauchleitung aus der Armatur zum Druckabbau erfolgen kann, andererseits aber ein Wegschleudern vermieden wird.

Die Montage der Schlauchfangsicherung, die auch nachträglich erfolgen kann, sei nachstehend kurz erläutert.

Zunächst ist sicherzustellen, dass das auszurüstende Schlauchleitungssystem drucklos ist. Nachdem die Befestigungselemente ausgewählt wurden, erfolgt ein Platzieren des Seillagers mittels Schlauchschelle an der Schlauchleitung. Hier wird bevorzugt ein Abstand von z.B. 45mm zwischen Schlauchschelle und Presshülse gewählt. Bei gebogenen Armaturen wird ergänzend die Einbaulage des Seillagers zur Rohrbiegung beachtet.

Danach wird die Schraube der Schlauchschelle angezogen, bis die Elastomerprofilbeilage auf dem Schlauch gesichert ist und dennoch ein Anschwellen des Schlauches entsprechend des zusätzlichen Betriebsdrucks erfolgen kann.

Es wird dann das Fangseil auf die Schlauchleitung gelegt. Die Seilenden werden so unter der Schlauchleitung hindurchgeführt, dass sich das Seil überkreuzt, und zwar unter Bildung einer Schlaufe. Danach werden die Seilenden durch die Bohrung im Seillager geführt, so dass ein weiterer Kreuzungspunkt entsteht. Bevor dann die Befestigungslasche verbaut wird, werden die Seilenden in den Aufnahmeschlitz eingeführt. Es erfolgt dann das Befestigen der Befestigungslasche an der Armatur und gegebenenfalls das Vorsehen eines Klettbandbinders im Bereich der Pressfassung. Die derart montierte Schlauchfangsicherung ist nun einsatzbereit.

Bezugszeichenliste

1   Schlauchleitung

2   Maschinenkomponente

3   Schraubarmatur

4   Hydraulikanschluss

5   Presshülse

6   Rohrstück

7       Fangseil

8       Hülse

9       Seillager

10      Flächenstück

11      Öffnung oder Bohrung

12      Aufnahmeschlitz

13      Befestigungslasche

14      Schlaufe

15      Schraube

16      Abschnitt des Fangseils 7

**Patentansprüche**

**1.** Sicherungseinrichtung für eine insbesondere Pressverbindung zwischen einer Schlauchleitung (1) und einer Anschlussarmatur (3; 5), umfassend ein Fangseil (7), eine Befestigungslasche (13) sowie ein schellenartiges Seillager (9) mit Öffnung oder Bohrung (11), wobei die Befestigungslasche (13) am schlauchleitungsfernen Ende mit der Anschlussarmatur (3; 5) verbunden und das Fangseil (7) am Seillager (9) fixierbar ist,
**dadurch gekennzeichnet, dass**
das Fangseil (7) als sich kreuzende Schlaufe um die Schlauchleitung(1) gelegt ist, die Seilenden kreuzend durch die Bohrung (10; 11) des Seillagers (9) geführt sind und die hindurchgeführten Seilenden an der Befestigungslasche (13) fixiert werden, wobei das Seillager (9) sich in einem vorgegebenen Abstand vom schlauchleitungsnahen Ende der Anschlussarmatur (5) auf der Schlauchleitung (1) und die Fangseilschlaufe (14) hinter dem Seillager (9), auf der der Anschlussarmatur (5) abgewandten Seite befinden.

**2.** Sicherungseinrichtung nach Anspruch 1,
**dadurch gekennzeichnet, dass**
die Befestigungslasche (13) mindestens einen Aufnahmeschlitz (12) für die jeweiligen, mit einer Verdickung oder einer Hülse (8) versehenen Enden des Fangseils (7) aufweist.

**3.** Sicherungseinrichtung nach Anspruch 1 oder 2,
**dadurch gekennzeichnet, dass**
das Fangseil (7) aus einem metallischen Material besteht.

**4.** Sicherungseinrichtung nach einem der vorangegangenen Ansprüche,
**dadurch gekennzeichnet, dass**
die Anschlussarmatur eine Presshülse (5) umfasst und ein Schlauchleitungsende aufnimmt, wobei der vorgegebene Abstand zwischen dem schlauchleitungsnahen Ende der Presshülse (5) und der Schelle des Seillagers (9) mindestens der doppelten Schellenbreite entspricht.

**5.** Sicherungseinrichtung nach einem der vorangegangenen Ansprüche,
**dadurch gekennzeichnet, dass**
die Schelle des Seillagers (9) eine innenseitige Beschichtung oder ein eingesetztes Profil aus einem elastomeren Material aufweist.

**6.** Sicherungseinrichtung nach einem der vorangegangenen Ansprüche,
**dadurch gekennzeichnet, dass**
die Schelle des Seillagers (9) ein Flächenstück (10) mit Bohrung oder Öffnung (11) zur Aufnahme des Fangseils (7) umfasst.

**7.** Sicherungseinrichtung nach Anspruch 6,
**dadurch gekennzeichnet, dass**
bei Rohrbogenabschnitten der Anschlussarmatur das Flächenstück (10) in der Biegeebene des Rohrbogens liegt.

**8.** Sicherungseinrichtung nach Anspruch 2 und 6 oder 7,
**dadurch gekennzeichnet, dass**
der Aufnahmeschlitz (12) der Befestigungslasche (13) in eine Richtung orientiert ist, die im Wesentlichen der radialen Richtung des Flächenstücks (10) mit Öffnung oder Bohrung (12) entspricht.

**9.** Sicherungseinrichtung nach einem der Ansprüche 6 bis 8,
**dadurch gekennzeichnet, dass**
das Flächenstück (10) von der Schellenbefestigung (15) fixiert ist.

**10.** Sicherungseinrichtung nach einem der vorangegangenen Ansprüche, **dadurch gekennzeichnet, dass**
das Fangseil (7) im Abschnitt zwischen Seillager (9) und Befestigungslasche (13) mittels Klettbandbinder oder dergleichen Mittel an der Armatur und/oder dem Schlauchabschnitt gehalten ist.

**11.** Sicherungseinrichtung nach einem der vorangegangenen Ansprüche,
**dadurch gekennzeichnet, dass**
sich die gestreckte Seillänge L aus der Beziehung:

$$L = 40 + 2 \times B + 2 \times C + 8{,}5 \times D$$

ergibt, wobei:

B = Abstand Seillager bis zum Befestigungspunkt der Befestigungslasche;
C = ungefähre Länge der Presshülsenfassung der Armatur und
D = Außendurchmesser der Schlauchleitung ist.

**12.** Sicherungseinrichtung nach Anspruch 11,
**dadurch gekennzeichnet, dass**
der Abstand A zwischen dem Seillager und der Presshülsenfassung der Armatur im Bereich zwischen 30m und 50mm, bevorzugt zwischen 35mm und 45mm liegt.

**Claims**

**1.** A securing device for a press-fit connection between a hose line (1) and a connecting fitting (3; 5), comprising
a catch cable (7);
an attachment lobe (13); and
a clamp shaped cable support (9) with an opening or borehole (11),
wherein the attachment lobe (13) is connected at an end of the connecting fitting (3; 5) that is remote from the hose line and the catch cable (7) is fixatable at the cable support (9),
wherein the catch cable (7) is applied as a cross-over loop about the hose line (1), the cable ends are run through the borehole (10; 11) of the cable support (9) so that the cable ends cross over and the cable ends that are run through are fixated at the attachment lobe (13),
wherein the cable support (9) is arranged on the hose line (1) at a predetermined distance from the end of the connecting fitting (5) that is proximal to the hose line and the catch cable loop (14) is arranged behind the cable support (9) on a side oriented away from the connecting fitting (5).

**2.** The securing device according to claim 1, wherein the attachment lobe (13) includes at least one receiving slot (12) for the respective ends of the catch cable (7) that are provided with a thickening or a jacket (8).

**3.** The securing device according to claim 1 or 2, wherein the catch cable (7) includes a metal material.

**4.** The securing device according to one of the preceding claims, wherein the connecting fitting includes a press sleeve (5) and receives a hose line end, wherein the predetermined distance between the end of the press sleeve (5) that is proximal to the hose and the clamp of the cable support (9) corresponds to at least double the width of the clamp.

5. The securing device according to one of the preceding claims, wherein the clamp of the cable support (9) includes an internal coating or an inserted profile made from an elastomeric material.

6. The securing device according to one of the preceding claims, wherein the clamp of the cable support (9) includes a surface section (10) with a borehole or opening (11) for receiving the catch cable (7).

7. The securing device according to claim 6, wherein the surface area (10) is arranged in a bending plane of a tube arch for tube arch sections of the connecting fitting.

8. The securing device according to claim 2 and 6 or 7, wherein the receiving slot (12) of the attachment lobe (13) is oriented in a direction which essentially corresponds to the radial direction of the surface section (10) with the opening or the borehole (12).

9. The securing device according to one of the claims 6 through 8, wherein the surface section (10) is fixated by the clamp attachment (15).

10. The securing device according to one of the preceding claims, wherein the catch cable (7) is supported in the section between the cable support (9) and the attachment lobe (13) through hook and loop strips or similar devices at the connecting fitting and/or the hose section.

11. The securing device according to one of the preceding claims, wherein the stretched cable length L can be derived from the equation:

$$L = 40 + 2 \times B + 2 \times C + 8.5 \times D$$

wherein:

B = distance of cable support to attachment point of attachment lobe;
C = approximate length of press sleeve fixture of the fitting; and
D = outer diameter of the hose line.

12. The securing device according to claim 11, wherein the distance A between the cable support and the press sleeve fixture of the fitting is in a range between 30 mm and 50 mm, preferably between 35 mm and 45 mm.

**Revendications**

1. Dispositif de sécurité pour un assemblage, notamment à la presse, entre une conduite souple (1) et un raccord (3 ; 5) comprenant un câble de retenue (7), une patte de fixation (13), ainsi qu'un palier à câble (9) semblable à un collier avec une ouverture ou un perçage (11), dans lequel la patte de fixation (13) est reliée au raccord (3 ; 5) à l'extrémité éloignée vis-à-vis de la conduite souple et le câble de retenue (7) est susceptible d'être fixé sur le palier à câble (9),
**caractérisé en ce que**
le câble de retenue (7) est posé autour de la conduite souple (1) sous la forme d'une boucle qui se croise, les extrémités du câble sont menées de manière à se croiser à travers le perçage (10 ; 11) du palier à câble (9), et les extrémités du câble une fois passées sont fixées sur la patte de fixation (13), dans lequel le palier à câble (9) se trouve sur la conduite souple (1) à une distance prédéterminée de l'extrémité, proche de la conduite souple, du raccord (5) et la boucle (14) du câble de retenue se trouve derrière le palier à câble (9), sur le côté détourné du raccord (5).

2. Dispositif de sécurité selon la revendication 1,
**caractérisé en ce que** la patte de fixation (13) comprend au moins une fente de réception (12) pour les extrémités respectives, dotées d'un épaississement ou d'une douille (8), du câble de retenue (7).

3. Dispositif de sécurité selon la revendication 1 ou 2,
   **caractérisé en ce que** le câble de retenue (7) est en un matériau métallique.

4. Dispositif de sécurité selon l'une des revendications précédentes,
   **caractérisé en ce que** le raccord comprend une douille de pressage (5) et reçoit une extrémité de la conduite souple, dans lequel la distance prédéterminée entre l'extrémité, proche de la conduite souple, de la douille de pressage (5) et le collier du palier à câble (9) correspond au moins au double de la largeur du collier.

5. Dispositif de sécurité selon l'une des revendications précédentes,
   **caractérisé en ce que** le collier du palier à câble (9) comprend un revêtement du côté intérieur ou un profilé intégré en un matériau élastomère.

6. Dispositif de sécurité selon l'une des revendications précédentes,
   **caractérisé en ce que** le collier du palier à câble (9) comprend une pièce surfacique (10) avec un perçage ou une ouverture (11) pour la réception du câble de retenue (7).

7. Dispositif de sécurité selon la revendication 6,
   **caractérisé en ce que** dans des tronçons en arc tubulaire du raccord, la pièce surfacique (10) est située dans le plan de flexion de l'arc tubulaire.

8. Dispositif de sécurité selon la revendication 2 et la revendication 6 ou 7,
   **caractérisé en ce que** la fente de réception (12) de la patte de fixation (13) est orientée dans une direction qui correspond sensiblement à la direction radiale de la pièce surfacique (10) avec ouverture ou perçage (12).

9. Dispositif de sécurité selon l'une des revendications 6 à 8,
   **caractérisé en ce que** la pièce surfacique (10) est fixée par la fixation à collier (15).

10. Dispositif de sécurité selon l'une des revendications précédentes,
    **caractérisé en ce que** le câble de retenue (7) est maintenu sur le raccord et/ou sur le tronçon de conduite souple au moyen de liens à bande agrippante ou de moyens similaires dans le tronçon entre le palier à câble (9) et la patte de fixation (13).

11. Dispositif de sécurité selon l'une des revendications précédentes,
    **caractérisé en ce que** la longueur de câble déployé résulte de l'équation :

$$L = 40 + 2 \text{ x } B + 2 \text{ x } C + 8,5 \text{ x } D$$

dans laquelle:

B est la distance du palier à câble jusqu'au point de fixation de la patte de fixation ;
C est la longueur approximative du socle du raccord pour la douille de pressage, et
D est le diamètre extérieur de la conduite souple.

12. Dispositif de sécurité selon la revendication 11,
    **caractérisé en ce que** la distance A entre le palier à câble et le socle du raccord pour la douille de pressage est dans la plage entre 30 mm et 50 mm, de préférence entre 35 mm et 45 mm.

Fig. 1

EP 2 193 304 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US PS3249370 A
- GB 2237346 A
- WO 2006100702 A1